# EUROPÄISCHE PATENTSCHRIFT

(11) **EP 1 773 940 B1**
(45) Veröffentlichungstag und Bekanntmachung des Hinweises auf die Patenterteilung: **20.05.2009**
(21) Anmeldenummer: 05775927.6
(22) Anmeldetag: 18.07.2005
(51) Int. Cl.: C08L 69/00, C08L 71/00

(54) **CYCLISCHE OLIGOFORMALE IN POLYCARBONAT**
CYCLIC OLIGOFORMALS IN POLYCARBONATES
OLIGOFORMALS CYCLIQUES DANS DES POLYCARBONATES

(30) Priorität: 29.07.2004 DE 102004036757
(43) Veröffentlichungstag der Anmeldung: 18.04.2007
(73) Patentinhaber: Bayer MaterialScience AG, 51368 Leverkusen (DE)
(72) Erfinder: WEHRMANN, Rolf, 47800 Krefeld (DE); HEUER, Helmut-Werner, 47829 Krefeld (DE)
(86) Internationale Anmeldenummer: PCT/EP2005/007788
(87) Internationale Veröffentlichungsnummer: WO 2006/012993

(56) Entgegenhaltungen:
- US-A- 4 136 087
- US-A- 4 254 252
- US-B1- 6 391 418

## Beschreibung

Die Anmeldung betrifft cyclische Oligoformale, thermoplastische Formmassen enthaltend Polycarbonat und mindestens ein erfmdungsgemäßes cyclisches Formal als Additiv zur Absenkung der Wasseraufnahme des Polycarbonates und der Verbesserung der Fließfähigkeit sowie die Verwendung solcher Formmassen zur Herstellung von Formkörper, insbesondere optischen Datenträger, wie z.B. Compact Disks, Video Disks, Digital Versatile Disks und weitere ein- oder mehrfach beschreib- wie löschbare optische Datenträger, sowie die entsprechenden Formkörper selbst.

Polycarbonate werden generell wegen ihrer besonderen Eigenschaftskombination wie Transparenz, Wärmeformbeständigkeit und Dimensionsstabilität als Materialien für den Spritzguss bzw. das Spritzprägen von optischen Datenträgern eingesetzt. Zur Verbesserung der Verarbeitbarkeit, die im Allgemeinen bei Temperaturen im Bereich von 300°C bis 400°C stattfindet, werden dem Polycarbonat in der Regel Additive, wie Entformungsmittel und Stabilisatoren zugesetzt.

Aromatische Polycarbonate auf Basis von Bisphenol A werden insbesondere für die Herstellung von optischen Datenträgern verwendet. Sie können jedoch bis zu 0,34 Gew. % Wasser aufnehmen, was sich ungünstig auf die Dimensionsstabilität der Datenträger auswirken kann. Eine verbesserte Dimensionsstabilität ist jedoch besonders beim Einsatz von blauen bzw. blau-grünen Lasern von Bedeutung.

In US B 6,391,418 werden Substrate für Datenträgermedien beschrieben, welche ein Biphenylderivat als Additiv zur Erhöhung der Dimensionsstabilität (geringerer Schrumpf) enthalten.

In M. Ueda, Mitsubishi Engineering Plastics Corp., Technical Digest of Joint ISOM / ODS 2002 Waikoloa Hawaii, 8. 7. 2002, Page 33 - 35 wird die Zugabe von kleinen Mengen an m-Terphenyl zu Bisphenol A Polycarbonat beschrieben, was zu einer Reduzierung der Wasseraufnahme führt. Der Nachteil dieser Biphenylderivate besteht jedoch darin, dass sie hoch-konjugierte aromatische π-Systeme darstellen, die bereits im blauen bzw. blau-grünen Spektralbereich absorbieren. Dies ist unerwünscht bei Speichertechnologien, welche in diesem Wellenlängenbereich arbeiten. Außerdem stellen Terphenyle relativ starre Moleküle dar, was sich negativ auf die mechanischen Eigenschaften in der Mischung mit Polycarbonat auswirkt.

Die im Stand der Technik beschriebenen Möglichkeiten führen also nicht zu in jeder Hinsicht befriedigenden Ergebnissen. Es ist im Stand der Technik aber auch keinerlei Andeutung zu finden, dass cyclische Oligoformale als Additive geeignet sein könnten.

Es bestand daher die Aufgabe, thermoplastische Formmassen, enthaltend Polycarbonat mit einer verringerten Wasseraufnahme bereitzustellen, welche dadurch eine bessere Dimensionsstabilität aufweisen. Insbesondere erfordern die neuen Diskformate mit höherer Speicherkapazität und ggf. geringerer Diskdicke, wie z.B. die Digital Versatile Disks (DVDs), eine höhere Thermostabilität im Vergleich zur CD. Auftretende Materialschädigung bei der Verarbeitung zu Formkörpern und Belagsbildung im Werkzeug werden kritischer. Somit ist es wünschenswert, dass ein Additiv zur Reduktion der Wasseraufnahme gleichzeitig eine Absenkung der Schmelzviskosität und damit ein besseres Fließen bei etwas niedrigeren Temperaturen bewirkt.

Mit den erfindungsgemäßen Formmassen wird diese Aufgabe überraschenderweise durch eine verbesserte Qualität der Datenspeicher und eine verbesserte Verarbeitbarkeit des Materials im Spritzguss bzw. Spritzprägeverfahren und eine reduzierte Wasseraufnahme und damit letztendlich eine verbesserte Dimensionsstabilität gelöst.

Gegenstand der vorliegenden Anmeldung sind daher thermoplastische Formmassen enthaltend ein Polycarbonat und mindestens ein erfindungsgemäßes cyclische Oligoformal mit spezieller chemischer Struktur als Additiv zur Reduktion der Wasseraufnahme. Diese cyclischen Oligoformale führen zu einer verbesserten Dimensionsstabilität der Datenträger und bewirken gleichzeitig eine niedrigere Schmelzviskosität.

Die erfindungsgemäßen Oligoformale weisen die allgemeine Formel (1) auf, 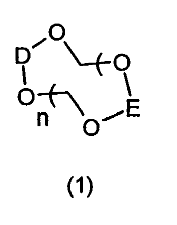 worin der Rest O-D-O bzw. O-E-O für statistisch eingebaute Diphenolatreste steht, in denen -D- und -E- unabhängig voneinander ein aromatischer Rest mit 6 bis 40 C-Atomen ist, der einen oder mehrere aromatische oder kondensierte, ggf Heteroatome enthaltende aromatische Kerne enthalten kann und ggf. mit C₁C₁₂-Alkylresten oder Halogen substituiert ist und aliphatische Reste, cycloaliphatische Reste, aromatische Kerne oder Heteroatome als Brückenglieder enthalten kann,
n ein Maß für die Ringgröße ist und für 2 - 25, vorzugsweise 2 - 20, insbesondere 3- 10 steht.

Bevorzugt sind auch Verbindungen der Formel (2) 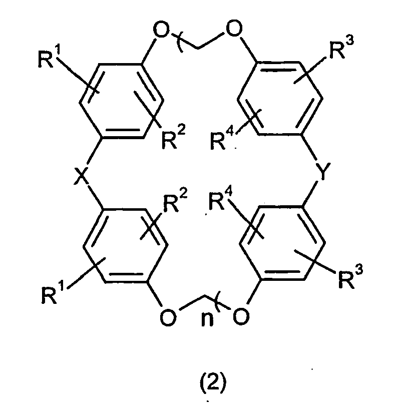 in der R¹ bis R⁴ unabhängig voneinander für H, lineare oder verzweigte C₁-C₁₈ Alkyl- oder Alkoxyreste, Halogen wie Cl oder Br oder für einen gegebenenfalls substituierten Aryl- oder Aralkylrest, bevorzugt für H oder lineare oder verzweigte C₁-C₁₂ Alkyl-, besonders bevorzugt für H oder C₁-C₈ Alkylreste und ganz besonders bevorzugt für H oder Methyl- stehen,

X sowie Y unabhängig voneinander für eine Einfachbindung, -SO₂-, -CO-, -O-, -S-, einen C₁- bis C₆-Alkylen-, C₂- bis C₅-Alkyliden-, C₅- bis C₆-Cycloalkylidenrest, der mit C₁- bis C₆-Alkyl, vorzugsweise Methyl- oder Ethylresten substituiert sein kann, oder einen C₆- bis C₁₂-Arylenrest, der gegebenenfalls. mit weiteren Heteroatome enthaltenden aromatischen Ringen kondensiert sein kann, stehen und
n die oben bei Formel (1) genannte Bedeutung hat.

Bevorzugt leiten sich die Diphenolatreste in Formel (1) von den im folgenden genannten Diphenolen ab:
Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω-Bis-(hydroxyphenyl)-polysiloxane genannt.

Besonders bevorzugte Diphenole sind 4,4'-Dihydroxybiphenyl (DOD), 2,2-Bis-(4-hydroxyphenyl)-propan (Bisphenol A), 1,1-Bis-(4-hydroayphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-1,4-Bis-[2-(4-hydroxyphenyl)-2-propyl]benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Ganz besonders bevorzugte Diphenole sind 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroayphenyl)-cyclohexan und 1,1-Bis-(4-hydroxyphenyl)-3,3,5-trimethylcyclohexan (Bisphenol TMC).

Insbesondere bevorzugt sind 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Ganz besonders bevorzugt sind cyclische Oligoformale durch die allgemeine Formel (3) beschrieben. 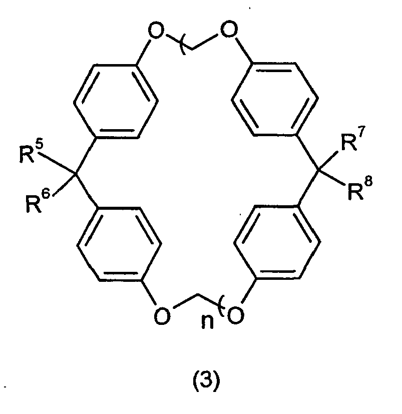 in denen
R⁵ bis R⁸ unabhängig voneinander bevorzugt für H oder lineare oder verzweigte C₁-C₁₂ Alkyl-, besonders bevorzugt für H oder C₁-C₈ Alkylreste und ganz besonders bevorzugt für H oder Methyl stehen, wobei R⁵ und R⁶ bzw. R⁷ und R⁸ auch zu einem C₅-C₁₀-Gycloalkylrest, der C₁-C₆-alkylsubstituiert sein kann, geschlossen sein kann und
n die oben genannte Bedeutung hat.

Ganz besonders bevorzugt sind weiterhin die Verbindungen der Formeln (4 a) bis (4c) 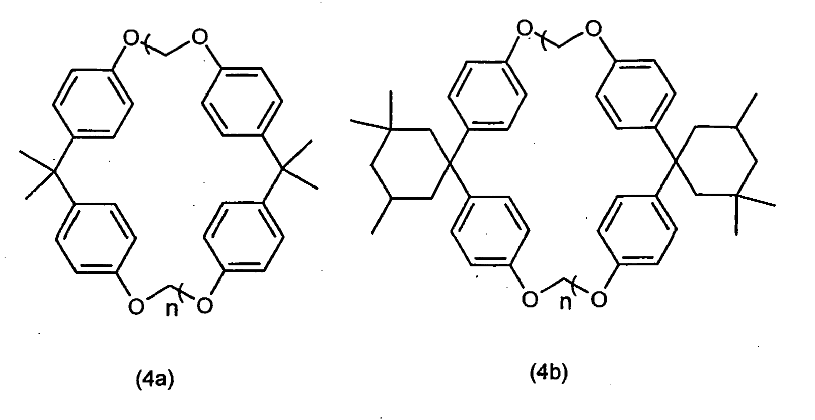 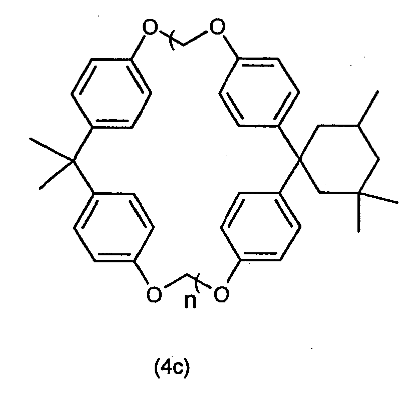 in denen n die oben genannte Bedeutung hat.

Die Diphenole können sowohl allein als auch im Gemisch miteinander verwendet werden. Im Falle, dass die cyclischen Oligoformale aus verschiedenen Diphenolen, vorzugsweise aus 2 unterschiedlichen Diphenolen, (d.h. die Reste D und E in Formel (1) bzw. die in Formel (2)) aufgeführten Diphenole haben unterschiedliche Struktur) aufgebaut sind, beträgt das Molverhältnis in % der Diphenole 95 : 5 bis 5 : 95, vorzugsweise 95 : 5 bis 10 : 90, besonders bevorzugt 95 : 5 bis 75 : 25 und insbesondere 90 : 10 bis 60 : 40. Die verschiedenen Diphenole sind im Allgemeinen statistisch im Ring verteilt.

Die Herstellung von cyclischen Oligoformalen kann im Unterschied zu Polycarbonat in homogener Phase aus Bisphenolen und Methylenchlorid in Gegenwart von Alkalihydroxiden erfolgen. Methylenchlorid fungiert bei dieser Kondensation gleichzeitig als Reaktand und als Lösungsmittel. In US-B 4,374,974 ist ein Verfahren beschrieben, in dem, ausgehend von speziellen Bisphenolen, nach Umsetzung mit Methylenchlorid, lineare und cyclische Oligo- und Polyformale erhalten werden können.

Die erfindungsgemäßen Polymermischungen enthalten die cyclischen Oligoformale im Allgemeinen zu einem Anteil von 10 -60 000 ppm, bevorzugt 10 - 50 000 ppm, besonders bevorzugt 20 - 40 000 ppm, ganz besonders bevorzugt zwischen 50 und 35 000 ppm, insbesondere 1 000 - 30 000 ppm.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Weiterhin sind Gegenstand der Erfmdung die Verwendung solcher Formmassen zur Herstellung von optischen Datenträgern, wie z. B. Compact Disks, Video Disks, Digital Versatile Disks und weitere ein- oder mehrfach schreib- wie löschbare optische Datenträger, sowie die aus den Polymermischungen herstellbaren optischen Datenträger selbst.

Selbstverständlich kann das Polymergemisch auch für andere traditionelle Polycarbonat-Anwendungen, auch in solchen die ein Polycarbonat mit einem höheren Molekulargewicht benutzen, benutzt werden. Die Anwendungen können transparent oder undurchsichtig sein wie zum Beispiele: Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten. Andere Beispiele der Anwendungen sind Profile, Folien, Gehäuseteile jeder Art, z.B. für Medizinische Geräte, Haushaltsgeräte wie Saftpressen, Kaffeemaschinen, Mixer; für Büromaschinen wie Computer, Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenausbau- und Bauteile von Schienenfahrzeugen, Schiffen, Flugzeugen, Bussen und anderen Kraftfahrzeugen sowie für Kfz-Karosserieteile verwendet werden.

Thermoplastische Formmassen im Sinne der vorliegenden Erfmdung enthalten überwiegend aromatische Polycarbonate. Unter Polycarbonate sind sowohl Homopolycarbonate als auch Copolycarbonate zu verstehen; die Polycarbonate können in bekannter Weise linear oder verzweigt sein. Sie weisen ein durch Gelpermeationschromatographie bestimmtes Gewichtsmittel des Molekulargewichts von zwischen 15 000 und 35 000, insbesondere 15 000 und 22 000.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,4-Bis-[2-(4-hydroxyphenyl)-2-propyl]benzol, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan und 1,3-Bis-[2-(4-hydroxyphenyl)-2-propyl]benzol.

Besonders bevorzugte Diphenole sind 2,2-Bis-(4-hydroxyphenyl)-propan (BPA), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,3-Bis-[2-(4-hydroxyphenyl)-2-propyl]benzol (BPM), 1,1-Bis-(4-hydroxyphenyl)-cyclohexan und 1,1-Bis-(4-hydroxyphenyl)-3,3,5-trimethylcyclohexan (TMC).

Diese und weitere geeignete Diphenole sind z.B. in den US 3 028 635, 2 999 835, 3 148 172, 2 991 273, 3 271 367, 4 982 014 und 2 999 846, in den DE-A 1570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den JP-A 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Bevorzugt werden Formmassen verwendet, die mindestens ein Polycarbonat mit Diolbausteinen aus BPA und/oder Trimethylcyclohexyl-bisphenol (TMC) enthalten, bevorzugt ausgewählt aus der Gruppe der Homopolymere des BPA, der Copolymere des BPA mit TMC oder der Copolymere mit 5 bis 60 Gew.-% TMC.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-isoOctylphenol, p-n-Nonylphenol und p-iso-Nonylphenol, p-Cumylphenol, Halogenphenole wie p-Chlorphenol, 2,4-Dichlorphenol, p-Bromphenol Amylphenol und 2,4,6-Tribromphenol sowie deren Mischungen.

Bevorzugte Kettenabbrecher sind die Phenole der Formel (I) 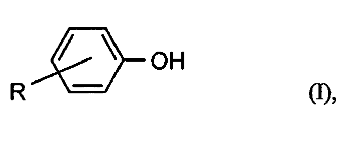 worin R Wasserstoff, tert.-Butyl oder ein verzweigter oder unverzweigter C₈- und/oder C₉-Alkylrest ist. Aber auch p-Cumylphenol kann bevorzugt verwendet werden. Im Falle des Umesterungsverfahrens resultiert der Kettenabbrecher aus dem eingesetzten Diarylcarbonat.

Die Menge an einzusetzendem Kettenabbrecher, bevorzugt im Phasengrenzflächenverfahren, beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und für einige Anwendungen sogar bevorzugt 3,3-Bis-(3-methyl-4-hydroxyphenyl)-2-oxo-2,3-dihydroindol.

Die Menge der gegebenenfalls einzusetzenden Verzweiger beträgt 0,01 Mol-% bis 2 Mol-%, bezogen wiederum auf Mole an jeweils eingesetzten Diphenolen.

Die Verzweiger können im Phasengrenzflächenverfahren entweder mit den Diphenolen und den Kettenabbrechern in der wässrig alkalischen Phase vorgelegt werden, oder in einem organischen Lösungsmittel gelöst zugegeben werden. Im Falle des Umesterungsverfahrens können die Verzweiger zusammen mit den Diphenolen eingesetzt werden.

Alle diese Maßnahmen zur Herstellung der thermoplastischen Polycarbonate sind dem Fachmann geläufig.

Den erfindungsgemäß thermoplastischen Polymermischungen können weiterhin für Polycarbonate übliche Zusätze in den bekannten Mengen enthalten, wie beispielhaft und vorzugsweise Stabilisatoren gegen UV-Strahlung, Flammschutzmittel, Farbstoffe, Füllstoffe, Schaummittel, optische Aufheller und Antistatika. Bei optischen Anwendungen werden bevorzugt solche Komponenten genommen, welche die Transparenz des Materials nicht negativ beeinflussen.

Diese Substanzen sind in vielen Veröffentlichungen zu finden wie etwa in Additives for Plastics Handbook, John Murphy, 1999 und im Handel erhältlich.

### 1. Geeignete Antioxidantien sind beispielsweise:

1.1. Alkylierte Monophenole, zum Beispiel 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexlyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel, 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol.
1.2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.
1.3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloayphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, zum Beispiel α-Tocopherol, β-Tocopherol, γ-Tocopherol, δ-Tocopherol und Gemische davon (Vitamin E).
1.5. Hydroxylierte Thiodiphenylether, zum Beispiel 2,2'-Thiobis(6-tert-butyl-4-methylphenol), 2,2'-Thiobis(4-octylphenol), 4,4'-Thiobis(6-tert-butyl-3-methyl-phenol), 4,4'-Thiobis(6-tert-butyl-2-methylphenol), 4,4'-Thiobis(3,6-di-sec-amylphe-nol), 4,4'-Bis(2,6-dimethyl-4-hydroxyphenyl)-disulfid.
1.6. Alkylidenbisphenole, zum Beispiel 2,2'-Methylenbis(6-tert-butyl-4-methylphenol), 2,2'-Methylenbis(6-tert-butyl-4-ethylphenol), 2,2'-Methylenbis[4-methyl-6-(α-methylcyclohexyl)-phenol], 2,2'-Methylenbis(4-methyl-6-cyclohexylphe-nol), 2,2'-Methylenbis(6-nonyl-4-methylphenol), 2,2'-Methylenbis(4,6-di-tert-butyl-phenol), 2,2'-Ethylidenbis(4,6-di-tert-butylphenol), 2,2'-Ethylidenbis(6-tert-butyl-4-isobutylphenol), 2,2'-Methylenbis[6-(a-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycolbis[3,3-bis(3'-tert-butyl-4'-hydroxyphenyl)butyrat], Bis(3-tert-butyl-4-hydroxy-5-methyl-phenyl)dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)-butan, 2,2-Bis(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
1.7. O-, N- und S-Benzylvrbindungen, zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat.
1.8. Hydroxybenzylierte Malonate, zum Beispiel Dioctadecyl-2,2-bis(3,5-di-tert-butyl-2-hydroxybenzyl)malonat, Dioctadecyl-2-(3-tert-butyl-4-hydroxy-5-methyl-benzyl)malonat, Didodecylmercaptoethyl-2,2-bis(3,5-di-tert-butyl-4-hydroxybenzyl) malonat, Bis[4-(1,1,3,3-tetramethylbutyl)phenyl]-2,2-bis(3,5-di-tert-butyl-4-hydroxy-benzyl)malonat.
1.9. Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxy-benzyl)-2,3,5,6-tetramethylbenzol, 2,4,6-Tris(3,5-di-tert-butyl-4-hydroaybenzyl)phenol.
1.10. Triazinverbindungen, zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxy-anilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropioyl)hexahydro-1,3,5-triazin, 1,3,5-Tris(3,5-dicyclohexyl-4-hydroxybenzyl)isocyanurat.
1.11. Acylaminophenole, zum Beispiel 4-Hydroxylauranilid, 4-Hydroxytearanilid, Octyl-N-(3,5-di-tert-butyl-4-hydroxyphenyl)carbamat.
1.12. Ester von β-(3,5-Di-tert-butyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, ganz besonder geeignet und bevorzugt ist dabei der Ester mit Octadecanol (IRGANOX 1076 ® der Ciba Spec.)
1.13. Ester von β-(5-tert-Butyl-4-hydroxy-3-methylphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
1.14. Ester von β-3,5-Dicyclohexyl-4-hydroxyphenyl)pronionsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxlyethyl)oxamid, 3-Thiaundecanol, 3-Thiapentadecanol, Trimethylhexandiol, Trimethylolpropan, 4-Hydroxymethyl-1-phospha-2,6,7-trioxabi-cyclo[2.2.2]octan.
1.15. Ester von 3,5-Di-tert-butyl-4-hydroxyphenylessisgäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
1.16. Amide of β-(3,5-Di-tert-butyl-4-hydroxyphenyl)propionsäure, z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl]-propionyloxy)ethyl]oxamid (Naugard® XL-1 von Uniroyal).
1.17. Ascorbinsäure (Vitamin C)
1.18. Aminische Antioxidantien, zum Beispiel N,N'-Diisopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylen-diamin, N-(1,3-Dimethylbutyl)-N'-phenyl=p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyl-diphenylamin, 4-n-Butylaminophenol, 4-Butyrylaminophenol, 4-Nonanoyl-aminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenyl-amino)propan, (o-Tolyl)biguanid, Bis[4-(1',3'-dimethylbutyl)phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetramethylpiperidin-4-ol. Es können einzelne dieser Verbindungen oder Gemische derselben eingesetzt werden.
1.19 Geeignete Thiosynergisten sind zum Beispiel Dilaurylthiodipropionat und/oder Distearylthiodipropionat.
2. UV-Absorber und Lichtstabilisatoren können in den erfindungsgemäßen Zusammensetzungen in Mengen von 0,1 bis 15 Gew.-%, vorzugsweise 3 bis 8 Gew.-%, bezogen auf die Masse der Zusammensetzung, eingesetzt werden. Geeignete UV-Absorber und .Lichtstabilisatoren sind beispielsweise:
2.1. 2-(2'-Hydroxyphenyl)benzotriazole, um Beispiel 2-(2'-Hydroxy-5'-methylphenyl)benzotriazol, 2-(3',5'-Di-tert-butyl-2'-hydroxyphenyl)benzotriazol, 2-(5'-tert-Butyl-2'-hydroxyphenylbenzotriazol, 2-(2'-Hydroxy-5'-(1,1,3,3-tetramethylbutyl) phenyl)benzo-triazol, 2-(3',5'-Di-tert-butyl-2'-hydroxyphenyl)-5-chlorbenzo-triazol, 2-(3'-tert-Butyl-2'-hydroxy-5'-methylphenyl)-5-chlorbenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxycarbonyl-ethyl)phenyl)-5-chlorbenzotriazol, 2-(3'-tert-Butyl-5'-[2-(2-ethyl-hexyloxy)carbonyl-ethyl]-2'-hydroxyphenyl)-5-chlorbenzotriazol, 2-(3'-tert-Butyl-2'-hydroxy-5'-(2-meth-oxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyl-oxycarbonylethyl)phenyl)benzotriazol, 2-(3'-tert-Butyl-5'-[2-(2-ethyl-hexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-5'-(2-isooctyl-oxycarbonylethyl)phenylbenzotriazol, 2,2'-Methylenbis[4-(1,1,3,3-tetramethylbutyl)-6-benzotriazol-2-ylphenol]; das Umesterungsprodukt von 2-[3'-tert-Butyl-5'-(2-methoxycarbonylethyl)-2'-hydroxyphenyl]-2H-benzotriazol mit Polyethylenglycol 300; [R-CH₂CH₂-COO-CH₂CH₂]₂, wobei R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-Hydroxy-3'-(1,1,3,3-tetramethylbutyl)-5'-(α,α-dimethylbenzyl)phenyl]benzotriazol.
2.2. 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate.
2.3. Ester von substituierten und unsubstituierten Benzoesäuren, wie zum Beispiel 4-tert-Butylphenylsalicylat, Phenylsalicylat, Octylphenylsalicylat, Bibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.
2.4. Acrylate, zum Beispiel Ethyl-α-cyan-β,β-diphenylacrylat, Isooctyl-α-cyan-β,β-diphenylacrylat, Methyl-α-carbomethoxycinnamat, Methyl-α-cyan-β-methyl-p-methoxycinnamat, Butyl-αcyan-β-methyl-p-methoxycinnamat, Methyl-α-carbomethoxy-p-methoxycinnamat und N-(β-Carbomethoxy-β-cyanvinyl)-2-methylindolin.
2.5. Nickelverbindungen, zum Beispiel Nickelkomplexe von 2,2'-Thiobis[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze der Monoalkylester, z.B. des Methyl- oder Ethylesters, von 4-Hydroxy-3,5-di-tert-butylbenzylphosphonsäure, Nickelkomplexe von Ketoximen, z.B. von 2-Hydroxy-4-methylphenylundecylketoxim, Nickelkomplexe von 1-Phenyl-4-lauroyl-5-hydroxypyrazol, mit oder ohne zusätzliche Liganden.
2.6. Sterisch gehinderte Amine zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4-piperidyl)sebacat, Bis(1,2,2,6,6-pentamethyl-4-piperidyl), n-Butyl-3,5-di-tert-butyl-4-hydroxy-benzylmalonat, das Kondensat von 1-(2-Hydroxyethyl)-2,2,6,6-tetramethyl-4-hydroxypiperidin und Bernsteinsäure, lineare oder cyclische Kondensate von N,N'-Bis-(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-Ethandiyl) bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethyl-piperidyl) sebacat, Bis(1-octyloxy-2,2,6,6-tetramethylpiperidyl)succinat, lineare oder cyclische Kondensate von N,N'-Bis(2,2,6,6-tetramethyl-4-piperidyl)hexamethylendiamin und 4-Morpholino-2,6-dichlor-1,3,5-triazin, das Kondensat von 2-Chlor-4,6-bis(4-n-butylamino-2,2,6,6-tetramethylpiperidyl)-1,3,5-triazin und 1,2-Bis(3-aminopropyl-amino)ethan, das Kondensat von 2-Chlor-4,6-bis(4-n-butylamino-1,2,2,6,6-penta-methylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-I-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, ein Gemisch von 4-Hexadecyloxy- und 4-Stearyloxy-2,2,6,6-tetramethylpiperidin, ein Kondensationsprodukt von N,N'-Bis(2,2,6,6-tetramethyl-4-piperidyl)hexamethylendiamin und 4-Cyclohexylamino-2,6-dichloro-1,3,5-triazin, ein Kondensationsprodukt von 1,2-Bis(3-aminopropylamino)ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecylsuccinimid, N-(1,2,2,6,6-Pentamethyl-4-piperidyl)-n-dodecyl-succinimid, 2-Undecyl-7,7,9,9-tetramethyl-1-oxa-3,8-diaza-4-oxospiro[4.5]decan, ein Reaktionsprodukt von 7,7,9,9-Tetramethyl-2-cycloundecyl-1-oxa-3,8-diaza-4-oxospiro[4.5]decan und Epichlorhydrin, 1, 1-Bis(1,2,2,6,6-pentamethyl-4-piperidyl-oxycarbonyl)-2-(4-methoxyphenyl)ethen, N,N'-Bis(formyl)-N,N'-bis(2,2,6,6-tetra-methyl-4-piperidyl)hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-α-Olefin-Copolymer mit 2,2,6,6-Tetramethyl-4-aminopiperidin oder 1,2,2,6,6-Pentamethyl-4-aminopiperidin.
2.7. Oxamide, zum Beispiel 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und dessen Gemisch mit 2-Ethoxy-2'-ethyl-5,4'-di-tert-butoxanilid, Gemische von o- und p-Methoxy-disubstituierten Oxaniliden und Gemische von o- und p-Ethoxy-disubstituierten Oxaniliden.
2.8. 2-(2-Hydroxyphenyl)-1,3,5-triazine, zum Beispiel 2,4,6-Tris(2-hydroxy-4-octyloxyphenyl)-1,3,5-triazin, 2-(2-Hydroxy-4-octyloxyphenyl)-4,6-bis(2,4-dimethyl-phenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxy-phenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-(2-Hydroxy-4-[3-(2-ethylhexyl-1-oxy)-2-hydroxypropyloxy]phenyl)-4,6-bis(2,4-dimethylphenyl)-1,3,5-triazin.

Es können einzelne dieser Verbindungen oder Gemische derselben eingesetzt werden.
3. Geeignete Metalldesaktivatoren sind zum Beispiel N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxalyldihydrazid, N,N'-Bis(salicyloyl)thiopropionyldihydrazid. Es können einzelne dieser Verbindungen oder Gemische derselben eingesetzt werden.
4. Geeignete Peroxidfänger sind zum Beispiel Ester von β-Thiodipropionsäure, zum Beispiel der Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythrittetrakis(dodecylmercapto)propionat. Es können einzelne dieser Verbindungen oder Gemische derselben eingesetzt werden.
5. Geeignete basische Costabilisatoren sind zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze höherer Fettsäuren, zum Beispiel Calciumstearat, Zinkstearat, Magnesiumbehenat, Magnesiumstearat, Natriumricinoleat und Kaliumpalmitat, Antimonpyrocatecholat oder Zinkpyrocatecholat. Es können einzelne dieser Verbindungen oder Gemische derselben eingesetzt werden.
6. Geeignete Keimbildner sind zum Beispiel anorganische Substanzen, wie Talk, Metalloxide, wie Titandioxid oder Magnesiumoxid, Phosphate, Carbonate oder Sulfate, vorzugsweise von Erdalkalimetallen; organische Verbindungen, wie Mono- oder Polycarbonsäuren und deren Salze, z.B. 4-tert-Butylbenzoesäure, Adipinsäure, Diphenylessigsäure, Natriumsuccinat oder Natriumbenzoat; polymere Verbindungen, wie ionische Copolymere (Ionomere). Besonders bevorzugt sind 1,3:2,4-Bis(3',4'-dimethylbenzyliden)sorbit, 1,3:2,4-Di(paramethyldibenzyliden)sorbit und 1,3:2,4-Di-(benzyliden)sorbit. Es können einzelne dieser Verbindungen oder Gemische derselben eingesetzt werden.
7. Geeignete Füllstoffe und Verstärkungsmittel sind zum Beispiel Calciumcarbonat, Silicate, Glasfasern, Glasballons, Asbest, Talk, Kaolin, Glimmer, Bariumsulfat, Metalloxide und -hydroxide, Ruß, Graphit, Wollastonit, Holzmehl und Mehle oder Fasern anderer Naturprodukte, synthetische Fasern. Es können einzelne dieser Verbindungen oder Gemische derselben eingesetzt werden.
8. Geeignete andere Additive sind zum Beispiel Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel.
9. Geeignete Benzofuranone und Indolinone sind zum Beispiel diejenigen, die in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 oder EP-A-0591102 offenbart sind, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy]phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzo-furan-2-on, 3-(3,4-Dimethylphenyl)-5,7-di-tert-butylbenzofuran-2-on, 3-(2,3-Dimethylphenyl)-5,7-di-tert-butylbenzofuran-2-on, Lacton-Antioxidantien wie 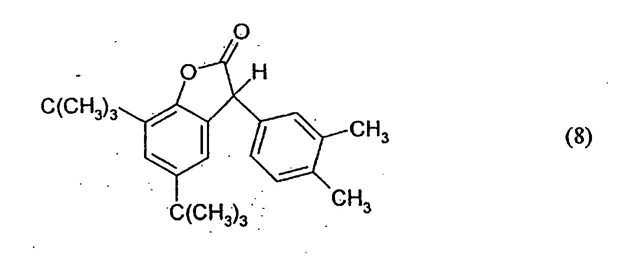 Diese Verbindungen wirken beispielsweise als Antioxidantien. Es können einzelne dieser Verbindungen oder Gemische derselben eingesetzt werden.
10. Geeignete fluoreszierende Weichmacher sind die in "Plastics Additives Handbook", Hrsg. R. Gächter und H. Müller, Hanser Verlag, 3. Aufl., 1990, Seite 775-789 aufgeführten.
11. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie Salze, wie C₄F₉SO₃⁻Na⁺.
12. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.
13. Geeignete Polymere sind SAN, ABS, PMMA, PTFE, PSU, PPS, Polyolefme, wie Polyethylen, Polypropylen und Ethylen-Propylen-Kautschuke, Epoxyharze, Polyester, wie PBT, PET, PCT, PCTG und PETG sowie andere im Grenzflächenverfahren erzeugte Polycarbonate.
14. Geeignete antistatische Mittel sind Sulfonatsalze beispielsweise Tetraethylammoniumsalze von C₁₂H₂₅SO³⁻ oder C₈F₁₇SO³⁻.
15. Geeignete Färbemittel sind Pigmente sowie organische und anorganische Farbstoffe.
16. Verbindungen, die Epoxygruppen enthalten, wie 3,4-Epoxycyclohexylmethyl-3,4-epoxycyclohexylcarboxylat, Copolymere von Glycidylmethacrylat und Epoxysilane.
17. Verbindungen, die Anhydridgruppen, wie Maleinsäureanhydrid, Bernsteinsäureanhydrid, Benzoesäureanhydrid und Phthalsäureanhydrid.
18. Als Stabilisatoren geeignete Phosphite und Phosphonites sind zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentaerythritdiphosphit, Bis(2,4-di-tert-butylphenyl)pentaerythritdiphosphit, Bis(2,6-di-tert-butyl-4-methylphenyl)pentaery-thritdiphosphit, Diisodecyloxypentaerythritdiphosphit, Bis(2,4-di-tert-butyl-6-methylphenyl)pentaerythritdiphosphit, Bis(2,4,6-tris(tert-butylphenyl)pentaerythritdiphosphit, Tristearylsorbittriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluor-2,4,8,10-tetra-tert-butyl-12-methyldibenz[d,g]-1,3,2-dioxaphosphocin, 2,2',2"-Nitrilo-[triethyltris(3,3', 5,5'tetra-tert-butyl-1,1'-biphenyl-2,2'-diyl)phosphit], 2-Ethyl-hexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran. Es können einzelne dieser Verbindungen oder Gemische derselben eingesetzt werden.

Besonders bevorzugt sind Tris(2,4-di-tert-butylphenyl)phosphit (Irgafos® 168, Ciba-Geigy), oder Triphenylphosphin.

Die Verbindungen der Gruppen 16 und 17 wirken als Schmelzestabilisatoren. Sie können einzeln oder in Gemischen eingesetzt werden.

Als Entformungsmittel werden vorzugsweise Ester ein- oder mehrwertiger Alkohole mit langkettigen Carbonsäuren verwandt wie Loxiol G32 oder Loxiol G33. Bevorzugt sind auch solche Entformungsmittel, die nicht vollständig verestert wurden, demnach freie OH-Gruppen aufweisen. Besonders bevorzugt sind (Teil-)Ester von gesättigten einwertigen Fettsäuren mit 16 bis 22 Kohlenstoffatomen mit Glycerin, Trimethylolpropan, Pentaerythrit oder ähnlichen mehrwertigen Alkoholen. Insbesondere Glycerinmonostearat (GMS) und Glycerinmonopalmiat. Weiterhin bevorzugt sind Pentaerythrittetrastearat (PETS),

Solche gesättigten einwertigen Fettsäureester des Glycerins werden alleine oder als Mischungen mit zwei oder mehr Komponenten eingesetzt. Die gesättigten Monoester des Glycerins werden üblicherweise über die Umesterung von hydriertem tierischem oder pflanzlichem Öl mit Glycerin hergestellt. Obwohl das Reaktionsprodukt auch andere Ester als die Glycerinester enthalten kann, wird es als Entformungsmittel eingesetzt. Beispielsweise kann die Mischung kleine oder größere Anteile von Diglyceriden und Triglyceriden enthalten.

Das Optimum der Entformungsmittelmenge bei der Herstellung von CD's und anderen optischen Speichermedien (DVD's etc.) ist einerseits durch eine ausreichende entformende Wirkung, andererseits durch Belagsbildung auf dem Werkzeug bestimmt. Üblicherweise eingesetzte Konzentrationen liegen zwischen 50 bis 1 000 ppm, vorteilhafter zwischen 100 und 500 ppm an Entformungsmittel. Für die übrigen Anwendungen von Polycarbonat liegen die Konzentrationen bei 100 - 10 000 ppm, bevorzugt bei 2 000 - 7 000 ppm.

Als Thermostabilisatoren werden beispielsweise spezielle Phosphite verwendet, welche sowohl aromatische wie aliphatische Reste in einem Molekül besitzen. Es sind Verbindungen der folgenden Struktur: 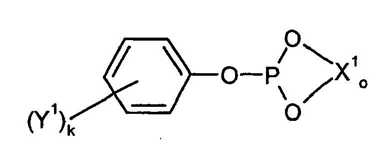 worin
- k: die Zahl 0-5, bevorzugt 1-3, ganz besonders bevorzugt 3 darstellt,
- Y¹: jeweils unabhängig voneinander Alkyl oder gegebenenfalls substituiertes Aryl, bevorzugt C₁-C₄-Alkyl, besonders bevorzugt Methyl, sec.Butyl und tert.-Butyl bedeutet,
- o: die Zahl 1-3, bevorzugt 3 darstellt und
- X¹: jeweils voneinander unabhängig für einen gegebenenfalls substituierten Methylenrest steht, wobei mindestens ein Methylenrest vollständig substituiert sein muss und die Substi- tuenten unabhängig voneinander aus der Gruppe C₁-C₂₀-Alkyl ausgewählt sind oder aber die zwei Substituenten an einem vollständig substituierten Methylenrest gemeinsam für ei- nen Rest 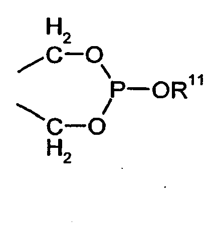 stehen,
in welchem R¹¹ aus der Gruppe C₁-C₁₈-Alkyl, C₃-C₁₂-Cycloalkyl, C₆-C₃₀-Alkaryl und Aryl, wobei diese Reste wiederum durch 1-4 O-Alkylen-O und /oder Carbonsäureester-COO- reste substituiert sein können; C₂-C₁₈-Polyhydroxyalkyl mit 2 bis 10 Hydroxylgruppen; C₂-C₁₈-Polyphenylreste mit 2 bis 10 phenolischen OH-Gruppen, ausgewählt sind.

Bevorzugt sind dabei Verbindungen der Formel 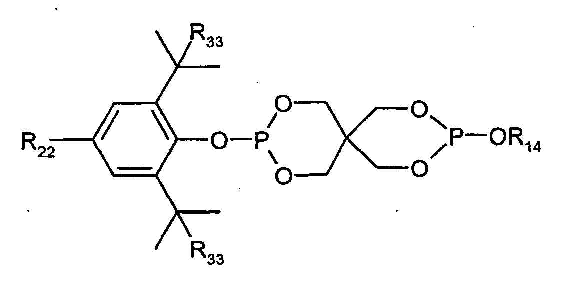 in welcher R²² für C₁-C₆-Alkyl;
- R³³: für Methyl oder Ethyl und
- R¹⁴: aus der Gruppe C₁-C₁₈-Alkyl, C₃-C₁₂-Cycloalkyl, C₆-C₂₀-Alkaryl und Aryl, wobei diese Reste wiederum durch 1-4 O-Alkylen-O und /oder Carbonsäureester-COO-reste substitu- iert sein können; C₂-C₁₈-Polyhydroxyalkyl mit 2 bis 10 Hydroxylgruppen; C₂-C₁₈- Polyphenylreste mit 2 bis 10 phenolischen OH-Gruppen, ausgewählt ist.

Ebenfalls bevorzugt sind Verbindungen der Formel 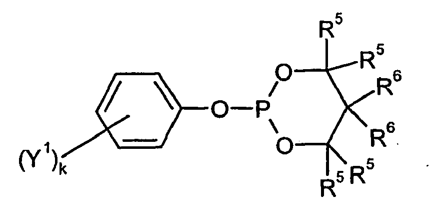 worin Y¹ und k die oben genannten Bedeutungen haben und
- R⁵: unabhängig voneinander aus der Gruppe Wasserstoff und C₃-C₂₀-Alkyl ausgewählt wird, bevorzugt steht dabei mind. ein R⁵ für Alkyl,
- R⁶: unabhängig voneinander für C₁-C₁₀-Alkyl stehen.

Besonders bevorzugt sind Verbindungen der Formel 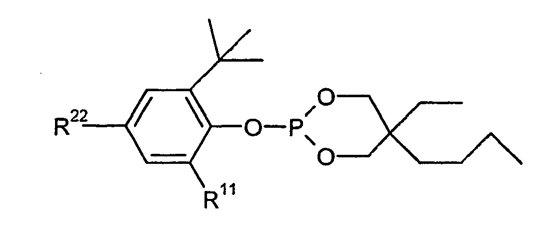 wobei R¹¹ und R²² für Methyl, sec-Butyl oder tert-Butyl stehen.

Ebenfalls besonders bevorzugt sind außerdem die in EP A1 0 038 876 auf S. 16-20 definierten Verbindungen sowie das in der gleichen Schrift auf Seite 21 genannte Beispiel.

Ganz besonders bevorzugt ist (2,4,6-Tri-t-butylphenyl)-(2-butyl-2-ethyl-propan-1,3-diyl)-phosphit, welches folgende Struktur aufweist:

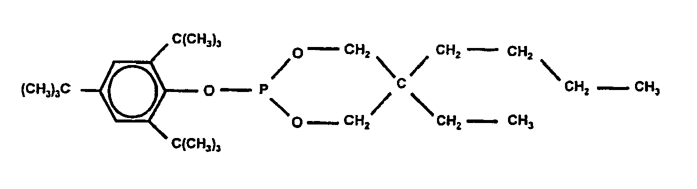

Die Phosphite können allein, jedoch auch in Kombination mit anderen Phosphorverbindungen eingesetzt werden, wobei die anderen Phosphorverbindungen auch solche sein können, die eine andere Oxidationszahl des Phosphors besitzen. Demnach können z.B. Kombinationen der erfindungsgemäßen Phosphite mit anderen Phosphiten, mit Phosphinen, z.B. Triphenylphosphin, mit Phosphoniten, mit Phosphaten, mit Phosphonaten usw. eingesetzt werden.

Die eingesetzten Phosphite sind generell bekannt oder analog bekannter Phosphite herstellbar, (2,4,6-Tri-t-butylphenyl)-(2-butyl-2-ethyl-propan-1,3-diyl)-phosphit ist z.B. beschrieben in der EP-A 702018 und EP 635514.

Die erfindungsgemäßen Polymermischungen enthalten die Phosphorverbindung im Allgemeinen zu einem Anteil von 10-5 000 ppm, bevorzugt 10 - 1 000 ppm, besonders bevorzugt 20 - 500 ppm, ganz besonders bevorzugt zwischen 50 und 250 ppm.

Der Zusatz der Entformungsmittel, der Phosphorverbindung und der erfindungsgemäßen Formale zu den thermoplastischen Formmassen erfolgt beispielhaft und vorzugsweise, indem man sie nach der Herstellung und während der Aufarbeitung der Polycarbonate, z.B. durch Zugabe zu der Polycarbonat-Polymerlösung, oder einer Schmelze der thermoplastischen Formmassen zudosiert. Weiterhin ist es auch möglich, die Komponenten unabhängig voneinander in verschiedenen Arbeitsschritten zuzudosieren, z.B. eine der Komponenten während der Aufarbeitung der Polymerlösung und die andere(n) Komponte(n) in der Schmelze, solange gewährleistet ist, dass alle Komponenten bei der Herstellung der Endprodukte (Formkörper) enthalten sind.

Der Fachmann wird für Anwendungen im Bereich der CD, DVD und anderer optischer Aufzeichnungsmedien aus den oben genannten Additiven selbstverständlich geeignete, die Transparenz nicht beeinträchtigende Additive auswählen.

Ganz besonders geeignete Additive sind IRGANOX 1076 ®, s.o. und Benzotriazole der Gruppe 2.1 (sog. Tinuvine), insbesondere in Mischung miteinander sowie Triphenylphosphin (TPP).

Die erfindungsgemäßen Formmassen werden in der für Polycarbonate bekannten Weise zur Herstellung von Formkörper, vorzugsweise optischen Medien, verwandt. Insbesondere zur Herstellung von Compact Discs und DVD's sowie einmal- oder mehrfach beschreibbaren bzw. löschbaren optischen Medien. Die beschreibbaren Schichten bestehen dabei insbesondere aus Farbstoffen oder metallischen Schichten, wobei letztere als Aufzeichnungsprinzip den Wechsel vom amorphen in den kristallinen Zustand benutzen oder magnetische Eigenschaften besitzen.

Diese Herstellung der optischen Medien erfolgt vorzugsweise aus den fertig hergestellten, erfindungsgemäßen Formmassen, die beispielsweise als Granulat anfallen. Die Herstellung der optischen Medien kann aber auch durch Einarbeitung der Komponenten zu reinen oder handelsüblichen Polycarbonaten und/oder zu den bei der Herstellung von Formkörpern aus Polycarbonaten üblichen Zusätzen erfolgen.

Ein weiterer Gegenstand der Erfindung sind demnach Formkörper, wie insbesondere optische Datenträger, bevorzugt Compact Discs und DVD's die aus den erfindungsgemäßen thermoplastischen Formmassen erhältlich sind.

Die erfindungsgemäßen thermoplastischen Formmassen haben den Vorteil, dass sie eine geringere Wasseraufnahme und damit eine verbesserte Dimensionsstabilität aufweisen. Außerdem zeichnen sie sich durch ein verbessertes Fließverhalten aus, da sie eine geringere Schmelzviskosität aufweisen.

Die nachfolgende Beispiele dienen zur Erläuterung der Erfindung. Die Erfindung ist nicht auf die Beispiele beschränkt.

### Beispiele:

### Beispiele:

### Beispiel 1

### Synthese des cyclischen Homooligoformals aus Bisphenol TMC:

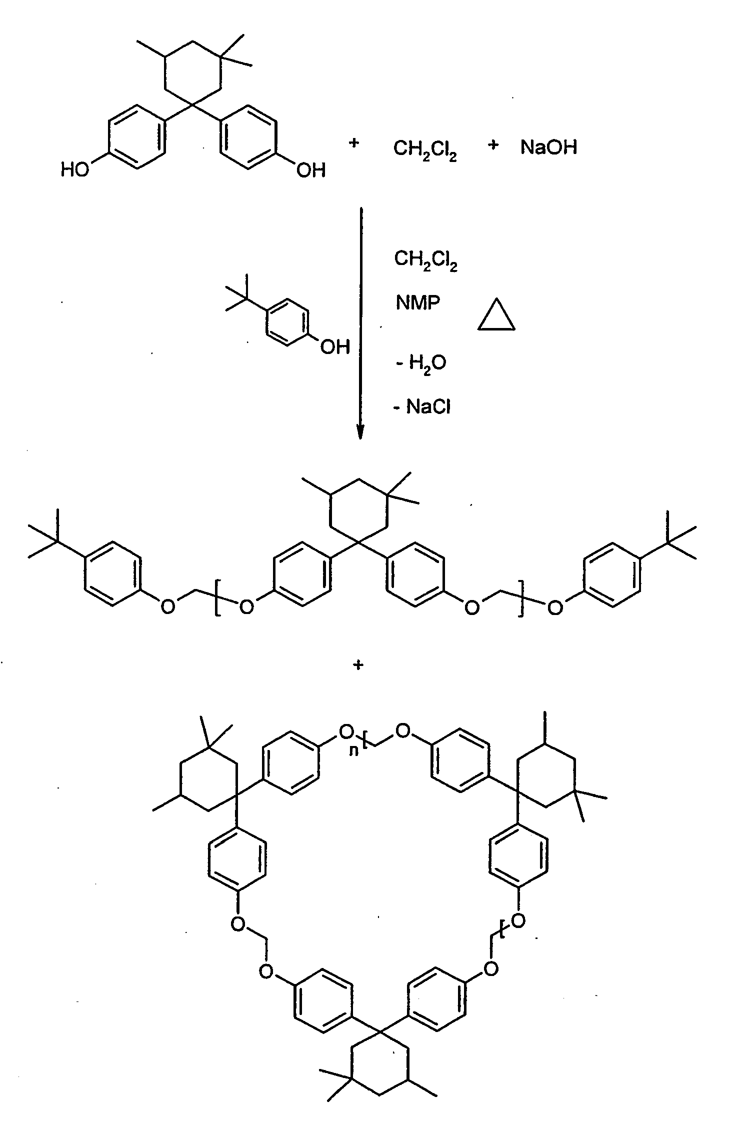

5 kg (16,11 mol) Bisphenol TMC, 1,611 kg (40,28 mol) Natriumhydroxid-Plätzchen und 24,18 g (0,16 mol) fein gemörsertes p-tert-Butylphenol (Aldrich) in 500 ml Methylenchlorid werden zu einem Lösungsmittelgemisch aus 20,5 kg Methylenchlorid und 28,7 kg N-Methyl-2-pyrrolidon (NMP) unter Rühren und Stickstoffschutzgas hinzu gegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 35 1 Methylenchlorid und 20 1 entmineralisiertem Wasser verdünnt. In einem Separator wird der Ansatz mit Wasser neutral und salzfrei (Leitfähigkeit < 15 µS.cm⁻¹)gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 280°C mit abschließender Granulierung. Dabei erhält man nach dem Verwerfen von Vorlaufmaterial insgesamt 1,96 kg eines Gemisches aus Polyformal und cyclisches Oligoformal als transparentes Granulat.

Der erhaltene Hauptlauf wird insgesamt 10 mal mit je 5 Liter Aceton im Kneter zur Abtrennung der Cyclen behandelt. Die vereinigten Acetonphasen werden zur Isolierung der Cyclen eingeengt. Nach Trocknung des Rückstandes erhält man 290 g Produkt.

### Analytik:

Analyse nach MALDI-TOF:
Gerät: Bruker Daltonic, Biflex III
Die Probe wurde im Linear-Mode untersucht.
Matrix: Dithranol
Adduktbildner: LiCl

MALDI-TOF (in Dithranol als Matrix / Li⁺) zeigt, dass das Produkt ausschließlich Ringe in der nachweisbaren Größe von Dreiringen (n=1) bis zu 19-Ringen (n=17) enthält.

### Beispiel 2-9:

Synthese von cyclischen Co-Oligoforinalen aus Bisphenol TMC und Bisphenol A mit variabler Zusammensetzung.

Analog der Synthese in Beispiel 1 werden weitere Formale hergestellt (siehe. Tabelle 1). Die Abtrennung der Cyclen erfolgt ebenfalls mit Aceton.

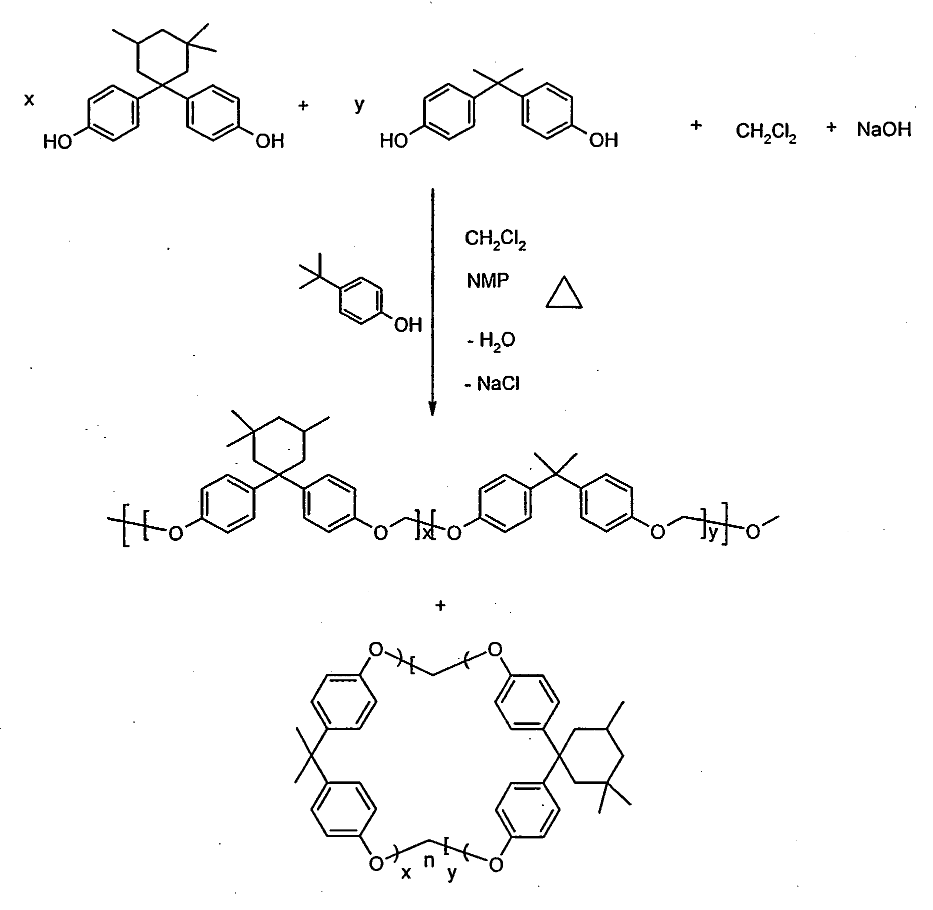

| Beispiel-Nr. | TMC [x mol-%] | BPA [y mol-%] |
|---|---|---|
| 2 | 30 | 70 |
| 3 | 35 | 65 |
| 4 | 40 | 60 |
| 5 | 50 | 50 |
| 6 | 55 | 45 |
| 7 | 70 | 30 |
| 8 | 80 | 20 |
| 9 | 90 | 10 |

### Analytik:

MALDI-TOF (in Dithranol als Matrix / Li⁺) zeigt, dass das Produkt ausschließlich Ringe in der nachweisbaren Größe von Dreiringen (n=2) bis zu 19-Ringen (n=18) enthält.

### Herstellung der Zusammensetzungen

Die Edukte werden in Methylenchlorid gelöst. Die homogene Lösung wird bis zur Trockne eingedampft und vor der Verarbeitung mittels einer Minispritzgussmaschine vorgetrocknet. Die erhaltenen Spritzgussstränge werden als Ausgangsmaterial zur Bestimmung der Wasseraufnahme verwendet.

Zur Bestimmung des Wassergehaltes bzw. der Wasseraufnahme der Zusammensetzungen werden die Proben im Feuchtklima bei 95 % relativer Luftfeuchte und 30°C Lagertemperatur gelagert. Der Wassergehalt wird unmittelbar vor Entbringung ins Feuchtklima sowie nach 7 und 14 Tagen mittels quantitativer Karl-Fischer-Titration (coulometrische Titration) bestimmt (Mittelwertbildung aus je 4 Messungen).

**Tabelle 1**

| Bsp. | Zusammensetzung | Wassergehalt | | |
|---|---|---|---|---|
| | | direkt | Nach 7 Tagen [%], | Nach 14 Tagen [%], |
| 10 | 98 % BPA-PC | 0,06 | 0,25 | 0,25 |
| | + 2 % Oligoformal aus Beispiel 1 | | | |
| 11 | 98 % Apec^{®} 1600 (Copolycarbonat der Bayer AG) | 0,06 | 0,24 | 0,25 |
| | + 2 % Oligoformal aus Beispiel 1 | | | |
| 12 | Vergleichsprobe 1: Apec^{®} 1600 | 0,06 | 0,28 | 0,32 |
| | (Copolycarbonat der Bayer AG) | | | |
| 13 | Vergleichsprobe 2: BPA PC; | 0,05 | 0,33 | 0,33 |

| | | | | |
|---|---|---|---|---|
| 1) BPA - PC = Polycarbonat auf Bisphenol A Basis, Melt Flow Rate bei 300°C, 1,2 kg = 63 g/10 min, Tg 145°C] | | | | |

## Patentansprüche

1. Zusanunensetzung enthaltend Polycarbonat mit einem Molekulargewicht von 15.000 bis 35.000 und/oder Polyestercarbonat und mindestens ein cyclisches Oligoformal der Formel (1) 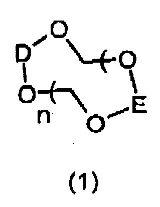 worin der Rest O-D-O bzw. O-E-O für statistisch eingebaute Diphenolatreste steht, in denen -D - und -E- unabhängig voneinander ein aromatischer Rest mit 6 bis 40 C-Atomen ist, der einen oder mehrere aromatische oder kondensiert, gegebenenfalls Heteroatome enthaltende aromatische Kerne enthalten kann und gegebenenfalls mit C₁-C₁₂-Alkylresten oder Halogen substituiert ist und aliphatische Reste, cycloaliphatische Reste, aromatische Kerne oder Heteroatome als Brückenglieder enthalten kann, und
n 2 bis 25 steht.

2. Zusammensetzung gemäß Anspruch 1, wobei die Diphenollatreste in Formel (1) abgeleitet sind von 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-1,4-Bis-[2-(4-hydroxyphenyl)-2-propyl]benzol, 1,3-Bis[2-(4-hydroxyphenyl)-2-propyl]-benzol (Bisphenol M), 2,2-Bis-(3-methyl-4-hydroxypttenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbu-tan, 2,2-13ins-(3,5-dichlor-4-hydroxyphenyl)-propan oder 2,2-Bis-(3,5-dibrom-4-hydroxy-phenyl)-propan.

3. Zusammensetzung gemäß Anspruch 1, wobei D und E verschieden sind.

4. Zusammensetzung gemäß Anspruch 3, wobei das Molverhältnis von D zu E 95:5 bis 5:95 beträgt.

5. Zusammensetzung gemäß den vorangehenden Ansprüchen, enthaltend cyclisches Oligoformal in einer Menge von von 10-60 000 ppm (bezogen auf Polycarbonat und/oder Polyestercarbonat).

6. Zusammensetzung gemäß den vorangehenden Ansprüchen, enthaltend Additive.

7. Verwendung der Zusammensetzungen gemäß der vorangehenden Ansprüche zur Herstellung von Formkörpern.

8. Formkörper erhältlich aus Zusammensetzungen gemäß Anspruch 1 bis 6.

9. Optische Datenträger, erhältlich aus Zusammensetzungen der Ansprüche 1 bis 6.

## Claims

1. A composition containing polycarbonate with a molecular weight of 15000 to 35000 and/or polyester carbonate and at least one cyclic oligoformal of the formula (1) 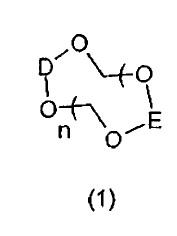 in which the residue O-D-O or O-E-O denotes randomly incorporated diphenolate residues, in which -D- and -E- are mutually independently an aromatic residue with 6 to 40 C atoms, which may contain one or more aromatic or fused aromatic nuclei optionally containing heteroatoms and is optionally substituted with C₁-C₁₂ alkyl residues or halogen and may contain aliphatic residues, cycloaliphatic residues, aromatic nuclei or heteroatoms as bridging members, and
n denotes 2 to 25.

2. A composition according to claim 1, wherein the diphenolate residues in the formula (1) are derived from 4,4'-dihydroxybiphenyl (DOD), 2,2-bis(4-hydroxyphenyl)propane (bisphenol A), 1,1-bis(4-hydroxyphenyl)-3,3,5-trimethylcyclohexane (bisphenol TMC), 1,1-bis(4-hydroxyphenyl)-cyclohexane, 2,4-bis(4-hydroxyphenyl)-2-methylbutane, 1,1-bis(4-hydroxyphenyl)-1-phenylethane, 1,1-1,4-bis[2-(4-hydroxyphenyl)-2-propyl]benzene, 1,3-bis[2-(4-hydroxyphenyl)-2-propyl]benzene (bisphenol M), 2,2-bis(3-methyl-4-hydroxyphenyl)propane, 2,2-bis(3-chloro-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulfone, 2,4-bis(3,5-dimethyl-4-hydroxyphenyl)-2-methylbutane, 2,2-bis(3,5-dichloro-4-hydroxyphenyl)propane or 2,2-bis(3,5-dibromo-4-hydroxyphenyl)propane.

3. A composition according to claim 1, wherein D and E are different.

4. A composition according to claim 3, wherein the molar ratio of D to E is 95:5-5:95.

5. A composition according to the preceding claims containing cyclic oligoformal in a quantity of 10-60,000 ppm (relative to polycarbonate and/or polyester carbonate).

6. A composition according to the preceding claims containing additives.

7. Use of the compositions according to the preceding claims for the production of mouldings.

8. Mouldings obtainable from compositions according to claims 1 to 6.

9. Optical data storage media obtainable from compositions of claims 1 to 6.

## Revendications

1. Composition contenant un polycarbonate ayant une masse moléculaire de 15 000 à 35 000 et/ou un polyestercarbonate et au moins un oligoformal cyclique de formule (1) : 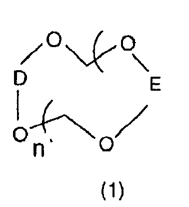 où le groupement O-D-O ou O-E-O représente des groupements diphénolates incorporés statistiquement dans lesquels -D- et -E- sont indépendamment l'un de l'autre un groupement aromatique ayant 6 à 40 atomes C qui peut contenir un ou plusieurs noyaux aromatiques ou condensés, contenant éventuellement des hétéroatomes et qui est éventuellement substitué avec des groupements C₁-C₁₂-alkyle ou halogène et qui peut contenir des groupements aliphatiques, des groupements cycloaliphatiques, des noyaux aromatiques ou des hétéroatomes comme éléments de pont, et
n représente 2 à 25.

2. Composition selon la revendication 1 où les groupements diphénolates dans la formule (1) sont dérivés du 4,4'-dihydroxybiphényle (DOD), du 2,2-bis-(4-hydroxyphényl)-propane (bisphénol A), du 1,1-bis-(4-hydroxyphényl)-3,3,5-triméthylcyclohexane (bisphénol TMC), du 1,1-bis-(4-hydroxyphényl)-cyclohexane, du 2,4-bis-(4-hydroxyphényl)-2-méthylbutane, du 1,1-bis-(4-hydroxyphényl)-1-phényléthane, du 1,1-1,4-bis-[2-(4-hydroxyphényl)-2-propyl]benzène, du 1,3-bis[2-(4-hydroxyphényl)-2-propyl]benzène (bisphénol M), du 2,2-bis-(3-méthyl-4-hydroxyphényl)propane, du 2,2-bis-(3-chloro-4-hydroxyphényl)-propane, du bis-(3,5-diméthyl-4-hydroxyphényl)-méthane, du 2,2-bis-(3,5-diméthyl-4-hydroxyphényl)-propane, de la bis-(3,5-diméthyl-4-hydroxyphényl)-sulfone, du 2,4-bis-(3,5-diméthyl-4-hydroxyphényl)-2-méthylbutane, du 2,2-bis-(3,5-dichloro-4-hydroxyphényl)propane ou du 2,2-bis-(3,5-dibromo-4-hydroxy-phényl)-propane.

3. Composition selon la revendication 1 où D et E sont différents.

4. Composition selon la revendication 3 où le rapport molaire de D à E est 95:5 à 5:95.

5. Composition selon les revendications précédentes contenant un oligoformal cyclique en une quantité de 10-60 000 ppm (par rapport au polycarbonate et/ou au polyestercarbonate).

6. Composition selon les revendications précédentes contenant des additifs.

7. Utilisation des compositions selon les revendications précédentes pour la production de corps mis en forme.

8. Corps mis en forme pouvant être obtenu à partir de compositions selon les revendications 1 à 6.

9. Supports de données optiques pouvant être obtenus à partir de compositions des revendications 1 à 6.
